# EUROPÄISCHE PATENTSCHRIFT

(11) **EP 0 695 498 B1**
(45) Veröffentlichungstag und Bekanntmachung des Hinweises auf die Patenterteilung: **26.11.1997**
(21) Anmeldenummer: 95111306.7
(22) Anmeldetag: 19.07.1995
(51) Int. Cl.: A01K 1/02, B65D 88/14

(54) **Container, insbesondere Flugcontainer, zum Transport von Tieren wie insbesondere Pferden**
Container, especially air-freight container, for the transport of animals, in particular horses
Conteneur, en particulier conteneur pour transport aérien, pour le transport d'animaux, en particulier de chevaux

(30) Priorität: 20.07.1994 DE 9411736 U
(43) Veröffentlichungstag der Anmeldung: 07.02.1996
(73) Patentinhaber: Geier, Horst Ludwig Johann, 28790 Schwanewede (DE)
(72) Erfinder: Geier, Horst Ludwig Johann, 28790 Schwanewede (DE)

(56) Entgegenhaltungen:
- WO-A-90/09098
- DATABASE WPI Week 8138 Derwent Publications Ltd., London, GB; AN J8706D & SU-A-793 513 (ARKHIPOV)

## Beschreibung

Die Erfindung betrifft einen Container, insbesondere einen Flugcontainer, zum Transport von Tieren wie insbesondere Pferden, mit einer im wesentlichen rechteckigen Grundfläche sowie Seiten- und Trennwänden zur Aufteilung der Grundfläche in einzelne Stellplätze, die jeweils wenigstens eine Zugangsmöglichkeit aufweisen, wobei die Tiere jeweils einzeln auf den Stellplätzen unterzubringen sind.

Pferdetransporte sind seit Jahren ein fester Bestandteil des Luftfrachtverkehrs. Die Pferde werden dabei in sog. Pferdeflugcontainern transportiert. Derartige Flugcontainer müssen hohe Ansprüche hinsichtlich Transportsicherheit/-schutz für die Pferde erfüllen. Ihre Größe und Bauweise wird u.a. durch das in den Frachträumen der Flugzeuge zur Verfügung stehende Raumangebot bestimmt. Die Größe der Flugcontainer und somit auch die daraus resultierende Anzahl von Pferdestellplätzen pro Container haben einen direkten Einfluß auf die Fracht-/Transportkosten.

Bekannte Flugcontainer werden quaderförmig gebaut und besitzen i.d.R. drei Pferdestellplätze, die jeweils eine rechteckige Grundfläche besitzen. Die drei Stellplätze sind so angeordnet, daß die Pferde darin nebeneinander, d.h. Seite an Seite (und zwar i.a. Kopf an Kopf) stehen. Die Flugcontainer weisen insbesondere an ihren beiden Stirnseiten Zugangsmöglichkeiten (Türen, Zugangstüren, Klappen od. dgl.) auf, so daß die Pferde geradewegs bzw. längs in den jeweils vorgesehenen Stellplatz hinein- und wieder aus ihm herausgehen können. I.a. sind in den Seitenwänden des Containers sowie in den Trennwänden zwischen den einzelnen Stellplätzen Lüftungsmöglichkeiten in Form von Öffnungen vorgesehen.

Ein solcher Flugcontainer ist aus der Druckschrift SU-A-793513 bekannt.

Ein wesentlicher Nachteil dieser bekannten Flugcontainer besteht darin, daß durch die genannte Anordnung der Stellplätze der pro Container angebotene Transportraum, insbesondere dessen Grundfläche, nicht optimal genutzt wird. Dies hat zur Folge, daß pro Container weniger Tiere/Pferde (nämlich nur drei Pferde) transportiert werden können, als eigentlich möglich wäre, mit der Folge entsprechend hoher Fracht-/Transportkosten. Letzteres erweist sich als besonders nachteilig, da die Kosten für den Flugtransport von Pferden im Überseeverkehr ohnehin beträchtlich sind.

Es ist zwar zur Optimierung der Raumausnutzung auch bereits vorgeschlagen und praktiziert worden, bei einem Pferde-Flugcontainer vor bzw. hinter drei parallel zueinander stehenden Pferde 11 (unter Einbeziehung einer entsprechenden Trennwand) ein viertes Pferd zu stellen, doch ist ein Pferdetransport, bei dem ein Pferd quer zur Flugrichtung steht, zwischenzeitlich laut JATA (International Air Transportation Association)-Empfehlungen nicht mehr gestattet.

Der vorliegenden Erfindung liegt die Aufgabe zugrunde, einen Container, insbesondere einen Flugcontainer zum Transport von Tieren wie insbesondere Pferden nach der eingangs beschriebenen Gattung zu schaffen, dessen Raumangebot, insbesondere dessen Grundfläche, durch eine entsprechende Anordnung und Gestaltung der Stellplätze möglichst gut genutzt wird. Des weiteren soll der Flugcontainer hohen Ansprüchen hinsichtlich der Transportsicherheit für die Tiere genügen und ein einfaches, bequemes Handling beim Be- und Entladen der Tiere sowie beim Verladen des Containers gewährleisten.

Die Lösung dieser Aufgabe ist erfindungsgemäß dadurch gekennzeichnet, daß die Trennwände so angeordnet sind, daß jeder Stellplatz an seinem einen Endabschnitt breiter als an seinem anderen Endabschnitt ist, wobei die Stellplätze paarweise so angeordnet sind, daß dem breiteren Endabschnitt eines ersten Stellplatzes eines Stellplatzpaares ein schmaler Endabschnitt des seitlich benachbarten zweiten Stellplatzes des betroffenen Stellplatzpaares zugeordnet ist.

Gemäß einer bevorzugten Ausgestaltung ist die Breite der Stellplätze in einem ersten Längenabschnitt konstant, in einem zweiten, darauffolgenden Längenabschnitt veränderlich und in einem dritten, wiederum darauffolgenden Längenabschnitt wieder konstant, wobei die Länge der Stellplätze bevorzugt kleiner als die Länge des Containers ist. Bei solch einer Gestaltung der Stellplätze können sich die Stellplätze jeweils paarweise eine rechteckige Fläche derart aufteilen, daß an der einen Stirnseite des Containers der eine Stellplatz eines Paares, und an der anderen Stirnseite der andere Stellplatz des betreffenden Paares breiter ist. Auf diese Weise wird berücksichtigt, daß Pferde im Rumpfbereich, d.h. insbesondere im Bereich der Hinterbeine, aber auch in dem der Vorderbeine, breiter sind, und folglich mehr Platz in der Breite benötigen, als im Kopfbereich. Wenn die Länge der Stellplätze kleiner als die des Containers ist, ergeben sich am Ende eines jeden Stellplatzes, bevorzugt an den schmaleren Enden, Räume für Flugbegleiter.

Die Trennwände zwischen den Stellplätzen sind bevorzugt um eine vertikale Achse schwenkbar, so daß die Pferde aus dem Flugcontainer auch an den Stirnseiten hinausgehen können, an denen sich der schmalere Endabschnitt ihrer Stellplätze befindet, indem die Trennwände zur Schaffung eines Durchgangs zwischen den einzelnen Stellplätzen in einfacher Weise zur Seite geschwenkt werden.

Bevorzugt ist des weiteren, wenn die Höhe der Trennwände und/oder der Zugangstüren geringer als die Höhe des Containers ist, wodurch Lüftungsmöglichkeiten für die Pferde geschaffen werden und Licht in den Container gelangen kann.

Die Seiten- und/oder die Trennwände sind bevorzugt mit einem weichen, gummiartigen Material gepolstert, um eine möglichst gute Transportsicherheit für die Pferde, bspw. beim seitlichen Anlehnen oder Anstoßen, zu erzielen. Aus dem gleichen Grund ist der Boden der Stellplätze mit einem rutschsicheren Material ausgelegt.

Die Trennwände und/oder Seitenwände könnten als Platten oder als Rohre ausgebildet sein. Die Seitenwände könnten als Rohrgitter ausgebildet sein.

Die Seitenwände könnten auch von langen, schmalen Streben gebildet werden, die horizontal und mit vertikalem Abstand zueinander befestigt sind.

Die Trennwände und/oder die Zugangstüren könnten aus Holz oder Aluminium bestehen. Auch die Seitenwände könnten aus Aluminium bestehen.

Die Trennwände und/oder die Seitenwände und/oder die Zugangstüren könnten aus Kunststoff, wie bspw. Polyäthylen, bestehen.

Höchst bevorzugt ist weiterhin, wenn die beiden Stellplätzes eines Paares jeweils gleiche Abmessungen aufweisen, wobei sich die Abmessungen der Stellplätze verschiedener Paare, insbesondere hinsichtlich ihrer Breite, unterscheiden. Die Trennlinie zwischen zwei Stellplatzpaaren ist hierbei nach wie vor parallel zu den beiden Seitenwänden des Containers, sie stimmt jedoch nicht mit der Mittellinie des Containers überein, weil die Summe aus zwei benachbarten Endabschnitten, einer mit größer Breite und einer mit kleinerer Breite, eines ersten Paares größer bzw. kleiner als die Summe aus zwei benachbarten Endabschnitten, wiederum einer mit größerer Breite und einer mit kleinerer Breite, eines zweiten Paares ist. Demnach weist diese bevorzugte Ausgestaltung Stellplätze mit (zumindest zwei) unterschiedlich großen Gründflächen auf, so daß der gleichzeitige Transport verschiedener Tiere bzw. Pferderassen, insbesondere mit unterschiedlicher Größe möglich ist.

Weitere bevorzugte Ausgestaltungen der Erfindung werden in den Unteransprüchen genannt.

Im folgenden wird die Erfindung anhand eines Ausführungsbeispiels unter Bezugnahme auf eine Zeichnung weiter erläutert. Es zeigt:
- Fig. 1: eine Draufsicht auf den erfindungsgemäßen Container im Schnitt;
- Fig. 2: einen Grundriß einer zweiten Ausgestaltung des erfindungsgemäßen Containers;
- Fig. 3: einen Grundriß einer dritten Ausgestaltung des erfindungsgemäßen Containers, bei der sich die Breite der Stellplätze kontinuierlich über deren Länge verändert;
- Fig. 4: einen Grundriß einer vierten Ausgestaltung des erfindungsgemäßen Containers, bei der die Stellplätze verschiedener Paare unterschiedliche Abmessungen aufweisen.

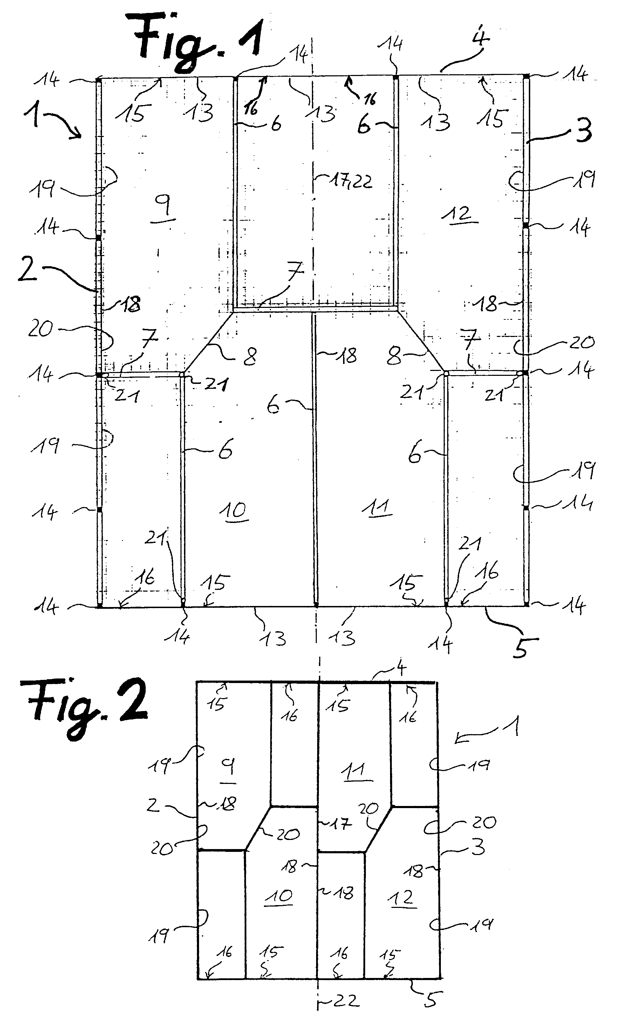

Fig. 1 zeigt eine Draufsicht auf den erfindungsgemäßen Container 1 im Schnitt mit zwei Seitenwänden 2, 3 an seinen Längsseiten sowie einer ersten 4 und zweiten 5 Stirnseite. Die rechteckige Grundfläche des Containers 1 wird mit längs- 6, quer- 7 und schräg verlaufenden 8 Trennwänden in einzelne Stellplätze 9, 10, 11, 12 unterteilt. An der ersten 4 und zweiten 5 Stirnseite des Containers 1 sind Türen 13, die um eine vertikale Achse 21 drehbar sind, vorgesehen, so daß die Stellplätze 9-12 Zugangsmöglichkeiten zum Herein- bzw. Herausgehen aufweisen. Das Gestell des Containers 1 besteht u.a. aus vertikal verlaufenden Streben 14, die bspw. rohrförmig oder als Vierkant ausgebildet sein können.

Die Stellplätze 9, 10, 11, 12 haben jeweils einen ersten Endabschnitt mit einer größeren Breite 15 und einen zweiten Endabschnitt mit einer kleineren Breite 16. Anhand der gestrichelten parallel zu den Seitenwänden 2, 3 des Containers 1 verlaufenden Trennlinie 17 ist zu erkennen, daß sich paarweise die Stellplätze 9 und 10 ebenso wie die Stellplätze 11 und 12 eine jeweils rechteckige Fläche aufteilen, wobei diese beiden rechteckigen Flächen in der Summe die Grundfläche des Flugcontainers 1 ergeben. Die Trennline 17 entspricht der Mittellinie 22 des Containers 1, wenn der Container 1 bspw. vier Stellplätze 9-12 von gleicher Größe aufweist, was jedoch ersichtlich nicht der Fall sein muß.

Das Be- und Entladen der Container 1 erfolgt auf dem Boden (bspw. dem Flughafengelände). Für jedes Pferd ist in dem Container ein Stellplatz 9-12 vorgesehen. Die Pferde betreten die jeweiligen Stellplätze 9-12 an deren breiteren Endabschnitten 15 und gehen geradewegs in die Stellplätze 9-12 hinein, so daß während des Transports ihre Hinterbeine im Bereich des Endabschnitts mit der größeren Breite 15 stehen und ihr Kopf dem Endabschnitt mit der kleineren Breite 16 zugewandt ist. Nach dem Beladen werden die Türen 13 geschlossen und verriegelt. Anschließend wird der transportfähige Container 1, der sich i.d.R. zum Verladen auf Paletten befindet, über Hebebühnen auf das Verladeequipment befördert.

Während des Transports werden die Pferde mit Futter, wie z.B. Stroh, versorgt, das sich in Behältern befindet, die im Bereich der quer verlaufenden Trennwände 7, d.h. in einem Bereich mit der kleineren Breite 16, angeordnet sind. Die Bereiche mit der kleineren Breite 16 bieten zudem Platz für Flugbegleiter, welche die Pferde betreuen.

Beim Entladen verlassen die Pferde den Container 1, indem sie rückwärts aus den Stellplätzen 9-12 herausgehen. Da einige Trennwände 6-8 um eine vertikale Achse 21 schwenkbar bzw. klappbar sind, kann alternativ ein Durchgang zwischen den Stellplätzen 9-12, insbesondere zwischen den Stellplätzen 9 und 10 einerseits sowie 11 und 12 andererseits, geschaffen werden, so daß die Pferde den Container 1 auch vorwärtsgehend verlassen können. Letzteres ist bspw. für den Fall wichtig, daß beim Be- und Entladen des Containers 1 aufgrund räumlicher Zwänge nur eine der beiden Stirnseiten 4 oder 5 zugänglich ist.

Fig. 2 zeigt einen Grundriß einer zweiten Ausgestaltung des erfindungsgemäßen Containers 1. Auch hier sind die Stellplätze 9-12 an ihren einen Endabschnitten 15 breiter als an ihren anderen Endabschnitten 16, so daß die Pferde eines Paares 9, 10 bzw. 11, 12 jeweils in entgegengesetzte Richtungen blickend gestellt werden. In Fig. 2 sind die Stellplätze 9-12 jedoch so angeordnet, daß an jeder der beiden Stirnseiten 4, 5 jeweils Endabschnitte mit größerer Breite 15 und Endabschnitte mit kleinerer Breite 16 abwechselnd aufeinanderfolgen, unabhängig davon, ob sie zusammen ein Stellplatzpaar bilden oder nicht. In Fig. 1 sind die Stellplätze 9-12 hingegen derart angeordnet, daß die Endabschnitte mit größerer Breite 15 bzw. die Endabschnitte mit kleinerer Breite 16 von seitlich benachbarten Stellplätzen 10, 11, die kein Stellplatzpaar miteinander bilden, jeweils an der gleichen Stirnseite 4, 5 des Containers 1 liegen.

In Fig. 3 ist eine dritte Ausgestaltung des erfindungsgemäßen Containers 1 dargestellt, bei der sich die Breite der Stellplätze 9-12 kontinuierlich über deren Länge 18 verändert. In der vorliegenden Ausgestaltung ändert sich die Breite linear über der Länge 18 der Stellplätze 9-12, was ersichtlich nicht der Fall sein muß. Im Sinne der Erfindung könnte dieser Verlauf auch kurvenförmig, bspw. mit zwei Wendepunkten, sein.

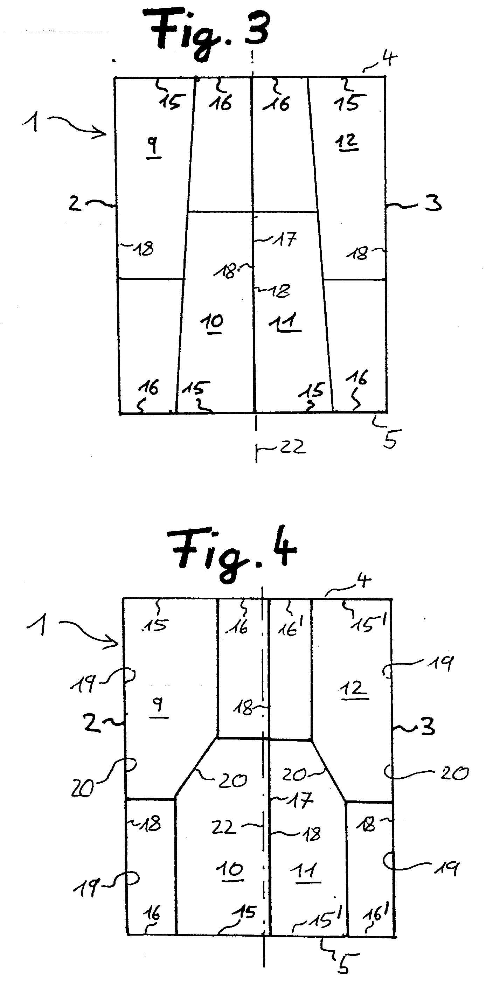

Fig. 4 zeigt einen Grundriß einer vierten Ausgestaltung des erfindungsgemäßen Containers 1, bei der die Stellplätze 9, 10 bzw. 11, 12 verschiedener Stellplatzpaare unterschiedliche Abmessungen 15, 16 bzw. 15', 16' aufweisen. Wie in Fig. 4 zu erkennen, stimmt die Trennlinie 17 zwischen zwei Stellplatzpaaren 9, 10 bzw. 11, 12 nicht mit der Mittellinie 22 des Containers 1 überein, da sich die Stellplätze 9, 10 zusammen eine größere Fläche des Containers 1 als die Stellplätze 11, 12 aufteilen. Auch bei dieser Ausgestaltung können seitlich benachbarte Stellplätze 9-12 auf eine Weise (gemäß Fig. 2) angeordnet sein, daß an beiden Stirnseiten 4, 5 des Containers 1 Endabschnitte mit größerer Breite 15 und Endabschnitte mit kleinerer Breite 16 abwechselnd aufeinanderfolgen, unabhängig davon, ob die betreffenden Stellplätze 9-12 zusammen ein Stellplatzpaar bilden oder nicht. Der wesentliche Vorteil dieser vierten Ausgestaltung besteht darin, Stellplätze 9-12 unterschiedlicher Größe, insbesondere hinsichtlich der Breite ihrer Grundflächen, anzubieten.

### Bezugszeichenliste

- 1: Container
- 2: Seitenwand/Längsseite (von 1)
- 3: Seitenwand/Längsseite (von 1)
- 4: erste Stirnseite (von 1)
- 5: zweite Stirnseite (von 2)
- 6: längs verlaufende Trennwand
- 7: quer verlaufende Trennwand
- 8: schräg verlaufende Trennwand
- 9: Stellplatz
- 10: Stellplatz
- 11: Stellplatz
- 12: Stellplatz
- 13: Türen, Zugangstüren, Klappen
- 14: vertikal verlaufende Strebe
- 15, 15': Endabschnitt mit größerer Breite (von 9-12)
- 16, 16': Endabschnitt mit kleinerer Breite (von 9-12)
- 17: Trennlinie
- 18: Länge (von 9-12)
- 19: Längenabschnitt mit konstanter Breite (von 9-12)
- 20: Längenabschnitt mit veränderlicher Breite (von 9-12)
- 21: vertikale Achse (von 2, 3 bzw. 6-8)
- 22: Mittellinie (von 1)

## Patentansprüche

1. Container, insbesondere Flugcontainer, zum Transport von Tieren wie insbesondere Pferden, mit einer im wesentlichen rechteckigen Grundfläche sowie Seiten- und Trennwänden (2, 3 bzw. 6-8) zur Aufteilung der Grundfläche in einzelne Stellplätze (9-12), die jeweils wenigstens eine Zugangsmöglichkeit (13) wie z.B. Zugangstüren, Klappen oder dgl. aufweisen, wobei die Tiere jeweils einzeln auf den Stellplätzen (9-12) unterzubringen sind, dadurch gekennzeichnet, daß die Trennwände (6-8) so angeordnet sind, daß jeder Stellplatz (9-12) an seinem einen Endabschnitt (15) breiter als an seinem anderen Endabschnitt (16) ist, wobei die Stellplätze (9-12) paarweise so angeordnet sind, daß dem breiteren Endabschnitt (15) eines ersten Stellplatzes (9 oder 11) eines Stellplatzpaares (9, 10 bzw. 11, 12) ein schmaler Endabschnitt (16) des seitlich benachbarten zweiten Stellplatzes (10) des betroffenen Stellplatzpaares (9, 10 bzw. 11, 12) zugeordnet ist.

2. Container nach Anspruch 1, dadurch gekennzeichnet, daß die Länge (18) der Stellplätze (9-12) größer als ihre Breite (15, 16) ist.

3. Container nach Anspruch 1 oder 2, dadurch gekennzeichnet, daß sich die Breite (15, 16) der Stellplätze (9-12) über deren Länge (18) verändert.

4. Container nach einem oder mehreren der vorhergehenden Ansprüche, dadurch gekennzeichnet, daß die Stellplätze (9-12) Längenabschnitte mit konstanter Breite (19) und Längenabschnitte mit veränderlicher Breite (20) aufweisen.

5. Container nach einem oder mehreren der vorhergehenden Ansprüche, dadurch gekennzeichnet, daß in einem ersten Längenabschnitt (19) die Breite der Stellplätze (9-12) konstant ist, in einem zweiten, darauffolgenden Längenabschnitt deren Breite (20) veränderlich ist und in einem dritten, darauffolgenden Längenabschnitt (19) deren Breite wieder konstant ist.

6. Container nach einem oder mehreren der vorhergehenden Ansprüche, dadurch gekennzeichnet, daß die Länge (18) der Stellplätze (9-12) gleich der Länge (2, 3) des Containers (1) ist.

7. Container nach einem oder mehreren der vorhergehenden Ansprüche, dadurch gekennzeichnet, daß die Länge (18) der Stellplätze (9-12) kleiner als die Länge (2, 3) des Containers (1) ist.

8. Container nach einem oder mehreren der vorhergehenden Ansprüche, dadurch gekennzeichnet, daß wenigstens einige Trennwände (6-8) und/oder Seitenwände (2, 3) um eine vertikale Achse (21) schwenkbar sind.

9. Container nach Anspruch 8, dadurch gekennzeichnet, daß alle Trennwände (6-8) und/oder Seitenwände (2, 3) um eine vertikale Achse schwenkbar sind.

10. Container nach einem oder mehreren der vorhergehenden Ansprüche, dadurch gekennzeichnet, daß die Trennwände (6-8) und/oder Seitenwände (2, 3) als Platten ausgebildet sind.

11. Container nach einem oder mehreren der Ansprüche 1 bis 9, dadurch gekennzeichnet, daß die Trennwände (6-8) und/oder Seitenwände (2, 3) als Rohre ausgebildet sind.

12. Container nach einem oder mehreren der Ansprüche 1 bis 9, dadurch gekennzeichnet, daß die Seitenwände (2, 3) als Rohrgitter ausgebildet sind.

13. Container nach einem oder mehreren der Ansprüche 1 bis 9, dadurch gekennzeichnet, daß die Seitenwände (2, 3) von langen, schmalen Streben gebildet werden, die horizontal verlaufen und mit vertikalem Abstand zueinander befestigt sind.

14. Container nach einem oder mehreren der vorhergehenden Ansprüche, dadurch gekennzeichnet, daß die Höhe der Trennwände (6-8) und/oder der Zugangstüren/Klappen (13) geringer als die Höhe des Containers (1) ist.

15. Container nach einem oder mehreren der vorhergehenden Ansprüche, dadurch gekennzeichnet, daß die Trennwände (6-8) und/oder die Zugangstüren/Klappen (13) aus Holz bestehen.

16. Container nach einem oder mehreren der Ansprüche 1 bis 14 dadurch gekennzeichnet, daß die Trennwände (6-8) und/oder die Zugangstüren/Klappen (13) aus Aluminium bestehen.

17. Container nach einem oder mehreren der vorhergehenden Ansprüche, dadurch gekennzeichnet, daß die Seitenwände (2, 3) aus Aluminium bestehen.

18. Container nach einem oder mehreren der vorhergehenden Ansprüche, dadurch gekennzeichnet, daß die Seiten- (2, 3) und/oder Trennwände (6, 8) mit einem weichem, gummiartigen Material gepolstert sind.

19. Container nach einem oder mehreren der vorhergehenden Ansprüche, dadurch gekennzeichnet, daß der Boden der Stellplätze (9-12) mit rutschsicheren Material, wie einem gummiartigen Material ausgelegt ist.

20. Container nach einem oder mehreren der vorhergehenden Ansprüche, dadurch gekennzeichnet, daß alle Stellplätze (9-12) die gleichen Abmessungen (18; 15, 16) aufweisen.

21. Container nach einem oder mehreren der Ansprüche 1-19, dadurch gekennzeichnet, daß die beiden Stellplätze eines Paares (9, 10 bzw. 11, 12) jeweils gleiche Abmessungen (18; 15, 16 bzw. 15', 16') aufweisen, wobei sich die Abmessungen (18; 15, 16 bzw. 15', 16') der Stellplätze verschiedener Paare (z.B. 9 und 11) insbesondere hinsichtlich ihrer Breite (15, 16 bzw. 15', 16') unterscheiden.

22. Container nach einem oder mehreren der Ansprüche von 1 bis 14 oder 18 bis 21, dadurch gekennzeichnet, daß die Trennwände und/oder die Seitenwände und/oder die Zugangstüren aus Kunststoff, wie bspw. Polyethylen, bestehen.

## Claims

1. Containers, especially air-freight containers for the transport of animals, like especially horses, with a predominantly square base, as well as side walls and partition walls (2,3 or 6-8) for the division of the base into single stalls (9-12), each of which has at least one means of entry (12) like e.g. access doors, gates or the like, in which the animals are to be stalled one in each stall (9-12), which are characterized by the fact that the partition walls (6-8) are arranged in a way that each stall (9-12) is wider along its one end-section (15) than along its other end-section (16), and in which the stalls (9-12) are arranged in pairs so that the wider end-section (15) of a first stall (9 or 11) of a pair of stalls (9, 10 or 11, 12) is next to a narrower end-section (16) of the neighbouring second stall (10) of the respective pair of stalls (9, 10 or 11, 12).

2. Containers according to claim 1, characterized by the fact that the length (18) of the stalls (9-12) is longer than their width (15, 16).

3. Containers according to claim 1 or 2, characterized by the fact that the width (15, 16) of the stalls (9-12) changes along their length (18).

4. Containers according to one or several of the aforesaid claims, characterized by the fact that the stalls (9-12) show longitudinal sections of constant width (19) and longitudinal sections of changing width (20).

5. Containers according to one or several of the aforesaid claims, characterized by the fact that the width of stalls (9-12) is constant in a first longitudinal section (19), changing in a second, adjacent longitudinal section (20) and again constant in a following third longitudinal section (19).

6. Containers according to one or several of the aforesaid claims, characterized by the fact that the length (18) of the stalls (9-12) equals the length (2, 3) of the container (1).

7. Containers according to one or several of the aforesaid claims, characterized by the fact that the length (18) of the stalls (9-12) is shorter than the length (2, 3) of the container (1).

8. Containers according to one or several of the aforesaid claims, characterized by the fact that at least some partition walls (6-8) and/or side walls (2, 3) can be turned around a vertical axis (21).

9. Containers according to claim 8, characterized by the fact that all partition walls (6-8) and/or side walls (2, 3) can be turned around a vertical axis.

10. Containers according to one or several of the aforesaid claims, characterized by the fact that the partition walls (6-8) and/or side walls (2, 3) are manufactured of sheet material.

11. Containers according to one or several of claims 1 to 9, characterized by the fact that the partition walls (6-8) and/or side walls (2, 3) are manufactured of tube material.

12. Containers according to one or several of claims 1 to 9, characterized by the fact that the side walls (2, 3) are designed as tubular grids.

13. Containers according to one or several of claims 1 to 9, characterized by the fact that the side walls (2, 3) are formed by long, narrow struts which run horizontally and are fastened with vertical distance towards each other.

14. Containers according to one or several of the aforesaid claims, characterized by the fact that the height of the partition walls and/or the access doors/gates (13) is lower than the height of the container (1).

15. Containers according to one or several of the aforesaid claims, characterized by the fact that the partition walls (6-8) and/or the access doors/gates (13) are made of wood.

16. Containers according to one or several of claims 1-14, characterized by the fact that the partition walls (6-8) and/or the access doors/gates (13) are made of aluminium.

17. Containers according to one or several of the aforesaid claims, characterized by the fact that the side walls (2, 3) are made of aluminium.

18. Containers according to one or several of the aforesaid claims, characterized by the fact that the side walls (2, 3) and/or partition walls (6, 8) are upholstered in a soft, rubber-like material.

19. Containers according to one or several of the aforesaid claims, characterized by the fact that the floors of the stalls (9-12) are covered with a non-slip material, like a rubber-like material.

20. Containers according to one or several of the aforesaid claims, characterized by the fact that all stalls (9-12) have the same dimensions (18; 15, 16).

21. Containers according to one or several of claims 1-19, characterized by the fact that the two stalls of a pair of stalls (9, 10 or 11, 12) have the same dimensions (18; 15, 16 or 15', 16'), but where the dimensions (18; 15, 16 or 15', 16') of stalls belonging to different pairs (e.g. 9 and 11) differ, especially as to their width (15, 16 or 15', 16').

22. Containers according to one or several of claims 1 to 14 or 18 to 21, characterized by the fact that the partition walls and/or the side walls and/or the access doors are made of plastic material, like e.g. polyethylene.

## Revendications

1. Un conteneur, en particulier un conteneur pour transports aériens, en vue du transport d'animaux tels en particulier les chevaux, présentant pour l'essentiel une surface de base rectangulaire de même que des parois latérales et des parois de séparation (2, 3 ou 6-8) partageant la surface de base en boxes individuels (9-12) présentant chacun une possibilité d'accès (13) comme portes d'accès, portières ou ibidem, les animaux étant chacun logés dans les boxes (9-12) séparément, caractérisé par le fait que les parois de séparations (6-8) sont disposées de manière telle que chaque boxe (9-12) soit plus large sur l'une de ses extrémités (15) que sur l'autre extrémité (16), les boxes (9-12) étant disposés par paire tel qu'à l'extrémité présentant la largeur la plus grande (15) d'un premier boxe (9 ou 11) d'une paire de boxes (9, 10 ou 11, 12) corresponde l'extrémité présentant la largeur la plus petite (16) du deuxième boxe voisin par le côté latéral (10) de la paire de boxes concernée (9, 10 ou 11, 12).

2. Conteneur, conforme à la revendication 1, caractérisé par le fait que la longueur (18) des boxes (9-12) est plus grande que leur largeur (15, 16).

3. Conteneur, conforme à la revendication 1 et 2, caractérisé par le fait que la largeur (15, 16) des boxes (9-12) est variable sur toute la longueur (18) de ceux-ci.

4. Conteneur, conforme à l'une ou à plusieurs des revendications précédentes, caractérisé par le fait que les boxes (9-12) présentent des segments longitudinaux ayant une largeur constante (19) et des segments longitudinaux ayant une largeur variable (20).

5. Conteneur, conforme à l'une ou à plusieurs des revendications précédentes, caractérisé par le fait que la largeur des boxes (9-12) est constante dans un premier segment longitudinal, que cette largeur (20) devient variable dans un deuxième segment longitudinal lui succédant, et que dans un troisième segment longitudinal (19) suivant, la largeur est de nouveau constante.

6. Conteneur, conforme à l'une ou à plusieurs des revendications précédentes, caractérisé par le fait que la longueur (18) des boxes (9-12) est égale à la longueur (2, 3) du conteneur (1).

7. Conteneur, conforme à l'une ou à plusieurs des revendications précédentes, caractérisé par le fait que la longueur (18) des boxes (9-12) est inférieure à la longueur (2, 3) du conteneur (1).

8. Conteneur, conforme à l'une ou à plusieurs des revendications précédentes, caractérisé par le fait qu'au moins quelques-unes des parois de séparations (6-8) et/ou des parois latérales (2, 3) sont amovibles selon un axe vertical (21).

9. Conteneur, conforme à la revendication 8, caractérisé par le fait que toutes les parois de séparations (6-8) et/ou des parois latérales (2, 3) sont amovibles selon un axe vertical.

10. Conteneur, conforme à l'une ou à plusieurs des revendications précédentes, caractérisé par le fait que les parois de séparation (6-8) et/ou les parois latérales (2, 3) ont la forme de plaques.

11. Conteneur, conforme à l'une ou à plusieurs des revendications de 1 à 9, caractérisé par le fait que les parois de séparation (6-8) et/ou les parois latérales (2, 3) ont la forme de tubes.

12. Conteneur, conforme à l'une ou à plusieurs des revendications de 1 à 9, caractérisé par le fait que les parois de séparation (6-8) et/ou les parois latérales (2, 3) ont la structure d'une grille en forme de tube.

13. Conteneur, conforme à l'une ou à plusieurs des revendications de 1 à 9, caractérisé par le fait que les parois latérales (2,3) sont formées d'entretoises longues et étroites disposées selon le sens de la longueur et fixées en formant entre elles un écart vertical.

14. Conteneur, conforme à l'une ou à plusieurs des revendications précédentes, caractérisé par le fait que la hauteur des parois de séparation (6-8) et/ ou des portes d'accès / volets (13) est inférieure à la hauteur du conteneur (1).

15. Conteneur, conforme à l'une ou à plusieurs des revendications précédentes, caractérisé par le fait que les parois de séparation (6-8) et/ou les portes d'accès / volets (13) sont constitués de bois.

16. Conteneur, conforme à l'une ou à plusieurs des revendications de 1 à 14, caractérisé par le fait que les parois de séparation (6-8) et/ou les portes d'accès / volets (13) sont constitués d'aluminium.

17. Conteneur, conforme à l'une ou à plusieurs des revendications précédentes, caractérisé par le fait que les parois latérales (2,3) sont constituées d'aluminium.

18. Conteneur, conforme à l'une ou à plusieurs des revendications précédentes, caractérisé par le fait que les parois latérales (2,3) et/ou les parois de séparation (6,8) sont rembourrées à l'aide d'une matière souple à base de gomme.

19. Conteneur, conforme à l'une ou à plusieurs des revendications précédentes, caractérisé par le fait que le sol des boxes (9-12) est recouvert d'une matière antidérapante, en exemple, une matière à base de gomme.

20. Conteneur, conforme à l'une ou à plusieurs des revendications précédentes, caractérisé par le fait que tous les boxes (9-12) présentent les mêmes dimensions. (18; 15; 16).

21. Conteneur, conforme à l'une ou à plusieurs des revendications de 1 à 19, caractérisé par le fait que les deux boxes d'une paire (9, 10 ou 11, 12) présentent chacun les mêmes dimensions (18; 15, 16 ou 15', 16'), les dimensions (18; 15, 16 ou 15', 16') des boxes de paires différentes (9 et 11 par ex.) se différenciant en particulier en ce qui concerne leur largeur (15, 16 ou 15', 16').

22. Conteneur, conforme à l'une ou à plusieurs des revendications de 1 à 14 ou de 18 à 21 caractérisé par le fait que les parois de séparation et/ou les parois latérales et/ou les portes d'accès sont en matière plastique, comme le polyéthylène par ex.
